**Europäisches Patentamt**

**European Patent Office**

**Office européen des brevets**

(11) Veröffentlichungsnummer : **0 005 282**
**B1**

# EUROPÄISCHE PATENTSCHRIFT

(45) Veröffentlichungstag der Patentschrift :
01.09.82

(21) Anmeldenummer : 79200147.1

(22) Anmeldetag : 27.03.79

(51) Int. Cl.³ : **H 01 B   3/24, H 01 B   3/28,**
**C 08 L   9/00**

(54) **Vergussmasse zum Füllen von Hohlräumen in elektrischen Apparaten.**

(30) Priorität : 27.04.78 CH 4557/78

(43) Veröffentlichungstag der Anmeldung :
14.11.79 (Patentblatt 79/23)

(45) Bekanntmachung des Hinweises auf die Patenterteilung : 01.09.82 Patentblatt 82/35

(84) Benannte Vertragsstaaten :
**BE DE FR GB IT NL SE**

(56) Entgegenhaltungen :
**BE A 675 328**
**CH A 335 728**
**DE A 2 602 988**
**DE A 2 614 983**
**DE B 1 249 843**
**DE B 1 285 991**
**DE B 1 935 744**
**FR A 2 005 699**
**FR A 2 315 152**

(73) Patentinhaber : **MICAFIL AG**
**Badenerstrasse Nr. 780**
**CH-8048 Zürich (CH)**

(72) Erfinder : **Striffeler, Werner**
**Hinterdorfstrasse 50**
**CH-8405 Winterthur (CH)**

(74) Vertreter : **von Bezold, Dieter, Dr. et al**
**Patentanwälte Dr. D. von Bezold, Dipl.-Ing. P. Schütz,**
**Dipl.-Ing. W. Heusler Maria-Theresia-Strasse 22**
**Postfach 86 02 60 D-8000 München 86 (DE)**

EP 0 005 282 B1

Imprimerie Jouve, 18, rue St-Denis, 75001 Paris, France

# 0 005 282

## Vergussmasse zum Füllen von Hohlräumen in elektrischen Apparaten

Die Erfindung bezieht sich auf eine Vergußmasse nach dem Oberbegriff des Anspruchs 1.

Elektrische Apparate enthalten häufig Hohlräume, die bei Hochspannungsgeräten zur Vermeidung von elektrischen Durchschlägen im allgemeinen mit flüßigen oder festen dielektrischen Medien ausgefüllt werden. Bei Verwendung von Isolieröl als Dielektrikum ist es zur Kompensation der Wärmeausdehnung notwendig, den Apparat mit einem Ölausgleichsgefäß auszurüsten. Da derartige Apparate meist nur in senkrechter Stellung transportiert und betrieben werden können und bei einem Leck das Öl austreten kann, ist das Ausfüllen der Hohlräume mit festen Massen anzustreben. Dies ist jedoch nicht in allen Fällen ohne weiteres möglich. Vor allem, wenn die Apparate Werkstoffe mit stark unterschiedlichen Ausdehnungskoeffizienten aufweisen, besteht bei festen Massen die Gefahr, daß bereits während der Härtung oder später bei Erwärmung im Betrieb Risse auftreten und die Bauteile zerstört werden können. Empfindliche Bauteile lassen sich zwar vor dem Vergießen mit elastischen Überzügen schützen, aber diese Arbeitsweise ist sehr umständlich. Die Durchführung von Reparaturen vergossener Bauteile ist praktisch nicht möglich. Es sind zwar Speziallösungsmittel, wie beispielsweise Dimethylformamid, bekannt, doch ist ihre Anwendung zeitraubend und schließen das Risiko nicht aus, daß Bauteile beschädigt oder zerstört werden können. Demnach sind die wesentlichsten Nachteile dieser festen dielektrischen Massen deren Inkompressibilität verbunden mit relativ großen Wärmeausdehnungskoeffizienten der einzelnen Apparatebauteile. Um die damit im Zusammenhang stehenden Probleme zu lösen, sind schon verschiedene Verfahren angewendet worden, die jedoch umfangreiche Maßnahmen erfordern. So wurde vorgeschlagen Isolieröl durch Zugabe von Verdickungsmittel, beispielsweise hochdisperser Kieselsäure, in einen festen, gelartigen Zustand überzuführen und durch Zusatz von Mikroballons eine kompressible dielektrische Masse herzustellen.

Ein Nachteil bei diesem Verfahren besteht hierbei darin, daß die Applikation Schwierigkeiten mit sich bringt, da bereits ein geringer Zusatz an Verdickungsmittel zu dem unpolaren Mineralöl eine schmierfettähnliche Konsistenz bewirkt, und die Masse demzufolge nicht mehr oder nur mit großem Aufwand in enge Hohlräume eingebracht werden kann. Einmal vorhandene Spalten oder Lunker innerhalb des Dielektrikums bleiben bestehen, da die Viskosität der Masse bis zu hohen Temperaturen konstant hoch bleibt.

Es ist bereits auch gemäß CH Patent 526 842 vorgeschlagen worden, chlorierte Diphenyle als Dielektrikum zu verwenden, die neben guten elektrischen Eigenschaften den großen Vorteil der Unbrennbarkeit haben. Das Verfahren wird in der Weise angewendet, daß man bei Raumtemperatur pulverförmiges Polystyrol in Trichlordiphenyl suspendiert, diese flüssige Masse in den zu füllenden Hohlraum eingießt und anschließend durch Erwärmung des gesamten Apparates das Gelatinieren der Masse bewirkt. Durch vorgängiges Einrühren von gasförmigen Stoffen in die Masse wird bei diesem Verfahren ein kompressibler Schaum erzeugt.

Von Nachteil ist hier aber die Notwendigkeit einer Wärmebehandlung, sowie die nicht in allen Fällen genügende Beständigkeit der Masse gegen höhere Temperaturen, denn ein länger dauerndes Erwärmen auf etwa 90 °C bewirkt bereits eine teilweise Verflüssigung.

Ferner ist ein Verfahren gemäß DE-B-20 50 232 bekannt, bei welchem die Hohlräume, beispielsweise bei einem elektrischen Hochspannungsgerät, mit einem Flüssigkautschuk ausgegossen und anschließend durch Erwärmung des Gerätes die Vergußmasse vulkanisiert wird. Diese Masse enthält keine Gasblasen. Da die Kompressibilität des Kautschuks sehr gering, der Wärmeausdehnungskoeffizient dagegen groß ist, ergibt sich ein starker Druckanstieg schon bei schwacher Erwärmung. Bei höheren Betriebstemperaturen kann der steigende Innendruck schließlich zur Zerstörung des Gerätes führen. Falls die elastische Zwischenschicht nur sehr dünn gehalten wird, halten sich die auftretenden Kräfte in Grenzen. Die Verwendung dieses Dielektrikums bleibt deshalb auf dünne Filme bzw. gering Wärmebeanspruchung beschränkt.

Schließlich ist aus der DE-A-2 602 988 eine härtbare Kautschukmasse bekannt, die ebenfalls aus mehreren Komponenten hergestellt wird und die in einer Ausführungsform auch bei Raumtemperatur ausgehärtet werden kann. Die Komponenten bestehen aus einem bei Raumtemperatur flüssigen, endständig bromierten Polybutadienkautschuk, einem fließfähigen Epoxidharz, mindestens einer Aminosäure, z.B. Argenin, Lysin, Hydroxylysin und Ornithin, und üblichen Hilfs- und Zusatzstoffen. Die erste Komponente, nämlich ein brombegrenztes Polybutadien, wird ohne Lösungsmittel eingesetzt. Die weitere Komponente, nämlich das Epoxidharz, hat die Funktion, die Aushärtung der Kautschukmasse bei Raumtemperatur zu ermöglichen. Als für diese Funktion geeignete Epoxidharze sind z.B. Epoxidharze vom Bisphenol-A-Typ, Epoxidharze vom Dimersäuretyp, Epoxidharze vom Polyalkylenäthertyp, Epoxidharze vom Novolaktyp, zykloaliphatische Epoxidharze (Epoxidharze vom Peracetattyp), Epoxidharze vom halogenierten Bisphenoltyp und Epoxidharze vom mehrwertigen Alkoholtyp angegeben. Der Lehre dieser DE-OS liegt die Aufgabe zugrunde, eine starke Fleckenbildung der Kautschukmasse während der Verarbeitung in der Form zu verhindern.

Der Erfindung liegt die Aufgabe zugrunde, eine Vergußmasse zum Füllen von Hohlräumen in elektrischen Apparaten zu schaffen, wobei die Vergußmasse sich erst besonders leicht in die Hohlräume einfüllen und dann aushärten lassen muß und wobei die ausgehärtete Vergußmasse hochwertige dielektrische Eigenschaften haben muß, kompressibel sein muß und nicht brennbar sein darf.

Zur Lösung dieser Aufgabe wurde nun eine Mehrkomponenten-Vergußmasse gefunden, die aus drei komponenten besteht und wobei die erste Komponente aus einem Gemisch von brombegrenztem Polybutadien, einem Epoxidharz und einem chlorierten Kohlenwasserstoff als Lösungsmittel besteht, die zweite Komponente (= Härterkomponente) ein polyfunktionelles Amin oder Aminoamid ist und wobei die dritte Komponente kleine Gasbläschen darstellt, die in das frisch angesetzte Zwei-Komponenten-Gemisch eingebracht worden sind.

Gegenstand der Erfindung ist somit eine Mehrkomponenten-Vergußmasse zum Füllen von Hohlräumen in elektrischen Apparaten, entstanden aus den Komponenten niedermolekulares, flüssiges, brombegrenztes Polybutadien sowie übliche Zusatzstoffe, Hilfsstoffe, Pigmente, Weichmacher und/oder Füllstoffe, ein Epoxidharz und wenigstens eine Aminoverbindung zur Polymervernetzung, die dadurch gekennzeichnet ist, daß man als erste Komponente

a) zusätzlich einen als Lösungsmittel an sich bekannten chlorierten Kohlenwasserstoff,

b) als Epoxidharz ein solches, das zwar aus dem chlorierten Kohlenwasserstoff gemäß Merkmal (a) eventuell abgespaltenes HCl bindet, aber nicht mit den als zweite Komponente eingesetzten Aminoverbindungen reagiert, nämlich ein epoxidiertes Cycloolefin in einer Menge von 0,1 bis 10 Gew.-Teilen des epoxidierten Cycloolefins auf 100 Gew.-Teile des Kohlenwasserstoffs nach Merkmal (a),

c) das brombegrenzte Polybutadien in einer Menge von 100 Gew.-Teilen des Polybutadiens auf 30 bis 300 Gew.-Teile des chlorierten Kohlenwasserstoffs nach Merkmal (a), als zweite Komponente

d) als Aminoverbindung in an sich bekannter Weise ein polyfunktionelles Amin oder Aminoamid und als zusätzliche Komponente

e) ein Gas in Form kleiner Gasblasen, eingebracht durch Begasen des frisch angesetzten Zwei-Komponenten-Gemisches, einsetzt.

Die Erfindung hat den Vorteil, daß die kompressible Vergußmasse durch das aus brombegrenztem Polybutadien und einem polyfunktionellen Amin oder Aminoamid bestehende vernetzende System bei Raumtemperatur in kurzer Zeit ausgehärtet wird, wobei durch Zugabe eines HCl-Akzeptors keine elektrisch und chemisch störenden Effekte auftreten können.

Ein weiterer Vorteil ist darin zu sehen, daß auch in Gegenwart von brennbaren organischen Polymeren selbstlöschende Eigenschaften der gehärteten Vergußmasse zu erreichen sind.

Die Verarbeitung der Vergußmasse erfolgt am zweckmäßigsten im 2-Komponenten-Verfahren. Zur Vereinigung und Homogenisierung der beiden Komponenten dient eine Rührwerkmischkammer, in die zusätzlich ein geeignetes Gas eingepreßt wird, mit nachgeschaltetem statischen Mischrohr. Auf diese Weise erhält man einen geschlossenzelligen Kautschuk mit feiner Schaumstruktur, was im Hinblick auf die Verwendung als kompressible Füllmasse unter elektrischer Beanspruchung wichtig ist.

Die Vergußmasse besteht im wesentlichen aus einem chlorierten aliphatischen oder aromatischen flüssigen Kohlenwasserstoff mit bei Raumtemperatur geringer Viskosität, einem in kleiner Menge im chlorierten Kohlenwasserstoff gelösten, als HCl-Akzeptor wirkenden, gegenüber aliphatischen Aminen inerten, cycloaliphatischen Epoxidharz, einem im chlorierten Kohlenwasserstoff löslichen niedermolekularen, brombegrenzten Polybutadien mit einer Viskosität von etwa $2.10^5$ mPas bei Raumtemperatur, einem die Vernetzung bei Raumtemperatur ermöglichenden aliphatischen Polyamin oder Polyaminoamid und einer kleinen Menge Antimontrioxid. Ferner enthält die Masse einen mineralischen Füllstoff, Farbpigmente, Alterungsschutzmittel sowie bis zu 50 Vol.-% eines gasförmigen Stoffes in feinverteiltem Zustand.

Das vernetzende System besteht aus brombegrenztem Polybutadien und einem polyfunktionellene Amin oder Aminoamid. Damit läßt sich eine Härtung bereits bei Raumtemperatur innerhalb kurzer Zeit durchführen. Da es sich um eine Polyaddition handelt, werden keine Reaktionsprodukte abgespalten, die sich auf die Eigenschaften der Vergußmasse ungünstig auswirken könnten.

Der chlorierte Kohlenwasserstoff, der vorzugsweise aus den verschiedenen Isomeren des Tri- oder Tetrachlordiphenyls oder deren Mischung besteht, hat mehrere Funktionen. Er ist für das brombegrenzte Polybutadien ein hervorragendes Lösungsmittel und erniedrigt wesentlich dessen Viskosität. Da sowohl Monomer als auch Polymer darin einwandfrei löslich sind, besteht in der Wärme nicht die Gefahr des Ausschwitzens oder der Phasentrennung. Ferner wirkt er als hochwertiges Dielektrikum mit geringen Verlusten bei Raumtemperatur und in der Wärme. Die elektrische Durchschlagfestigkeit ist hoch. Für hohe Ansprüche in bezug auf dielektrisches Verhalten sind die Chlorkohlenwasserstoffe der aromatischen Reihe den aliphatischen wegen der besseren Wärmestabilität vorzuziehen.

Bei genügend hohem Chlorierungsgrad ergeben sich auch in Gegenwart von brembaren organischen Polymeren selbstlöschende Eigenschaften der gehärteten Vergußmasse. Falls nötig, kann die Flammwidrigkeit mit Antimontrioxid noch gesteigert werden. Zur Aufnahme eventuell freiwerdender Salzsäure empfiehlt es sich, dem chlorierten Kohlenwasserstoff eine gewisse Menge eines HCl-Akzeptors zuzusetzen. Dafür eignen sich beispielsweise Verbindungen, die zur Klasse der epoxidierten Cycloolefine zählen. Bisphenol-A- und Glycidylesterharze kommen nicht in Betracht, da sie mit aliphatischen Polyaminen spontan reagieren.

Als anorganische Füllstoffe werden die in Elektrogießharzen üblichen verwendet, wie Quarzmehl, Mikrodolomit, Kreide, Aluminiumoxid usw. Feine Korngröße wirkt dabei allzu starker Sedimentation entgegen.

Der Anteil an gasförmigen Stoffen kann je nach den gewünschten Endeigenschaften zwischen 0 und etwa 50 Vol.-% gewählt werden. Hohe Gasanteile ergeben eine hohe Kompressibilität und somit einen geringen Druckanstieg im Innern der Vergußmasse bei Erwärmung. Demgegenüber muß eine niedrigere Durchschlagfestigkeit in Kauf genommen werden. Bei Reduzierung des Gasgehaltes erhält man einen steileren Druckanstieg verbunden mit hoher elektrischer Festigkeit. Vor allem aus elektrischen Gründen sollten die Gasblasen möglichst klein sein ; im Idealfall liegt der maximale Blasendurchmesser unter 0,5 mm. Als Gase kommen Luft, Stickstoff, Kohlendioxid oder Schwefelhexafluorid in Betracht. Für die meisten Anwendungen wird Stickstoff das Optimum darstellen, da er der Masse einen gewissen Oxidationsschutz verleiht und zudem eine hohe elektrische Durchschlagfestigkeit besitzt. In besonderen Fällen, wo erhöhte Anforderungen an die elektrische Festigkeit gestellt werden, ist $SF_6$ vorzuziehen.

Die Härtungszeit der Mischung kann innerhalb weiter Grenzen variiert werden. Sie nimmt mit steigender Menge an festen oder flüssigen Füllstoffen zu. Günstige Werte lassen sich beispielsweise dadurch erhalten, daß man Mischungen verwendet, die das Butadienpolymer, den flüssigen Chlorkohlenwasserstoff sowie den festen Füllstoff in Verhältnis 1 : 0,3 ; 0,3 bis 1 : 3 : 3 enthalten. Eine gewisse Mindestviskosität sollte nicht durch allzu starkes Verdünnen unterschritten werden, da sonst die eingebrachten Glasblasen zu rasch aufsteigen. Bei Einhaltung des oben erwähnten Mischungsverhältnisses lassen sich bei Raumtemperatur günstige Gießviskositäten erhalten. Die Härtung dauert bei 20 °C etwa 24 Stunden. Die endgültigen Eigenschaften erhält die Vergußmasse nach 2 bis 3 Tagen.

## Beispiel 1

### A) Polymerkomponente

100 Gewichtsteile brombegrenztes Polybutadien mit einer Viskosität von etwa $2.10^5$ mPas bei 20 °C werden in einer Mischung, bestehend aus 90 Gewichtsteilen Trichlordiphenyl und 1 Gewichtsteil Vinylcyclohexendioxid unter Rühren bei Raumtemperatur gelöst. Man fügt 100 Gewichtsteile gefälltes Calciumcarbonat und 10 Gewichtsteile Antimontrioxid zu und homogenisiert diese Mischung sorgfältig.

### B) Härterkomponente

Durch Auflösen von 5 Gewichtsteilen methyliertem Pentaäthylenhexamin (PEHA) in 55 Gewichtsteilen Trichlordiphenyl erhält man die Härterkomponente.

Die im Verhältnis A : B = 5 ; 1 gemischte mit 15 Vol.-% Stickstoff begaste Vergußmasse, bei welcher auf 100 Gewichtsteile Polymer 5 Gewichtsteile methyliertes PEHA entfallen, weist nach einer bei Raumtemperatur erfolgten Härtung während 48 Stunden folgende Eigenschaften auf :

| | |
|---|---|
| Druckanstieg bei konstantem Volumen bei einer Temperaturerhöhung von 20 auf 90 °C | etwa 0,4 bar |
| Elektrische Durchschlagfestigkeit der begasten Masse gemessen bei 20 °C Kugel/Kugel, d = 3 mm | 23 kV |
| Elektrische Durchschlagfestigkeit der gasfreien Masse gemessen bei 20 °C Kugel/Kugel, d = 3 mm als Vergleichswert | 70 kV |
| Dielektrischer Verlustfaktor bei 20 °C, 50 Hz | tg δ < 0,02 |
| bei 90 °C, 50 Hz | tg δ < 0,08 |
| Brennbarkeit der Vergußmasse | selbstlöschend |

## Beispiel 2

100 Gewichtsteile brombegrenztes Polybutadien wie im Beispiel 1 werden in 120 Gewichtsteilen eines chlorierten n-Paraffins mit einem Chlorgehalt von etwa 40 Gew.-% und einer Viskosität von etwa 100 mPas bei 20 °C gelöst. Man fügt 2 Gewichtsteile Vinylcyclohexendioxid, 30 Gewichtsteile gefälltes Calciumcarbonat sowie 10 Gewichtsteile Antimontrioxid zu und homogenisiert diese Mischung. Nachdem die eingerührte Luft durch kurzes Evakuieren entfernt wurde, gibt man 5 Gewichtsteile methyliertes Pentaäthylenhexamin (PEHA) zu und begast die Masse mit 20 Vol.-% Stickstoff.

Die Aushärtung erfolgt unter Luft- und Feuchtigkeitsausschluß. Nach einer Härtungszeit von 48 Stunden bei Raumtemperatur weist die Vergußmasse folgende Eigenschaften auf :

| | |
|---|---|
| Druckanstieg bei konstantem Volumen bei einer Temperaturerhöhung von 20 bis 90 °C | etwa 0,3 bar |
| Elektrische Durchschlagfestigkeit der begasten Masse gemessen bei 20 °C Kugel/Kugel, d = 3 mm | 16 kV |
| Elektrische Durchschlagfestigkeit der gasfreien Masse gemessen bei 20 °C Kugel/Kugel, d = 3 mm | 60 kV |
| Dielektrischer Verlustfaktor bei 20 °C, 50 Hz | tg δ 0,07 bis 0,1 |
| Brennbarkeit der Vergußmasse | selbstlöschend |

**Ansprüche**

1. Mehrkomponenten-Vergußmasse zum Füllen von Hohlräumen in elektrischen Apparaten, entstanden aus den Komponenten

— niedermolekulares, flüssiges, brombegrenztes Polybutadien sowie übliche Zusatzstoffe, Hilfsstoffe, Pigmente, Weichmacher und/oder Füllstoffe,

— ein Epoxidharz und

— wenigstens eine Aminoverbindung zur Polymervernetzung, dadurch gekennzeichnet, daß man als erste Komponente

a) zusätzlich einen als Lösungsmittel an sich bekannten chlorierten Kohlenwasserstoff,

b) als Epoxidharz ein solches, das zwar aus dem chlorierten Kohlenwasserstoff gemäß Merkmal (a) eventuell abgespaltenes HCl bindet, aber nicht mit den als zweite Komponente eingesetzten Aminoverbindungen reagiert, nämlich ein epoxidiertes Cycloolefin in einer Menge von 0,1 bis 10 Gew.-Teilen des epoxidierten Cycloolefins auf 100 Gew.-Teile des Kohlenwasserstoffs nach Merkmal (a),

c) das brombegrenzte Polybutadien in einer Menge von 100 Gew.-Teilen des Polybutadiens auf 30 bis 300 Gew.-Teile des chlorierten Kohlenwasserstoffs nach Merkmal (a), als zweite Komponente

d) als Aminoverbindung in an sich bekannter Weise ein polyfunktionelles Amin oder Aminoamid und als zusätzliche Komponente

e) ein Gas in Form kleiner Gasblasen, eingebracht durch Begasen des frisch angesetzten Zwei-Komponenten-Gemischs, einsetzt.

2. Vergußmasse nach Anspruch 1, dadurch gekennzeichnet, daß der chlorierte Kohlenwasserstoff nach Merkmal (a) aus einem chlorierten n-Paraffin oder einem Paraffingemisch des Bereiches $C_{10}$ bis $C_{20}$, mit einem Chlorgehalt zwischen 40 bis 60 Gew.-% und einer Viskosität zwischen 100 und 10 000 mPas bei 20 °C besteht.

3. Vergußmasse nach den Ansprüchen 1 und 2, dadurch gekennzeichnet, daß sie zusätzlich auf 100 Gew.-Teile des Polybutadiens nach Merkmal (c) 1 bis 30 Gew.-Teile Antimontrioxid enthält.

4. Vergußmasse nach den Ansprüchen 1 bis 3, dadurch gekennzeichnet, daß in Merkmal (b) das epoxidierte Cycloolefin Vinylcyclohexendioxid ist.

**Claims**

1. Multi-component embedding mass for filling voids in electrical apparatus, formed from the components

— low-molecular, liquid, bromine-terminated polybutadiene and usual additives, auxiliary agents, pigments, plasticizers and/or fillers ;

— an epoxy resin and

— at least one amino compound for polymer cross-linking, characterised in that one uses as the first component

a) additionally a chlorinated hydrocarbon known per se as a solvent,

b) as epoxy resin, one which combines with HCl that may be liberated from the chlorinated hydrocarbon of feature (a) but does not react with the amino compounds added as the second component, namely an epoxylated cyclo-olefin in an amount of 0.1 to 10 parts by weight of the epoxidized cyclo-olefin to 100 parts by weight of the chlorinated hydrocarbon of feature (a),

c) the bromine-terminated polybutadiene in an amount of 100 parts by weight of the polybutadiene to 30 to 300 parts by weight of the chlorinated hydrocarbon of feature (a), as the second component

d) a polyfunctional amine or amino amide as the amino compound in a manner known per se and as an additional compound

e) a gas in the form of small gas bubbles introduced by treating the freshly prepared two-component mixture with gas.

2. Embedding mass as claimed in Claim 1 characterised in that the chlorinated hydrocarbon of feature (a) comprises a chlorinated n-paraffin or a paraffin mixture in the range of $C_{10}$ to $C_{20}$ with a chlorine content between 40 to 60 % wt. and a viscosity between 100 and 10 000 mPas at 20 °C.

3. Embedding mass as claimed in Claims 1 and 2 characterised in that it contains 1 to 30 parts by weight antimony trioxide in addition to 100 parts by weight of the polybutadiene.

4. Embedding mass as claimed in Claims 1 to 3 characterised in that in feature (b) the epoxidized cyclo-olefin is vinylcyclohexenedioxide.

**Revendications**

1. Masse de remplissage à plusieurs composants destinée à remplir les espaces creux d'appareils électriques, constituée par les composants suivants ;

— du polybutadiène limité par du brome, fluide et de faible poids moléculaire, ainsi que des

5

substances additionnelles, des auxiliaires, des pigments, des plastifiants et/ou des charges de type habituel,

— une résine époxy et

— au moins un composé amino destiné à la réticulation de polymérisation, caractérisé en ce qu'on utilise en tant que premier composant :

a) en supplément un hydrocarbure chloré connu en soi et constituant un solvant,

b) en tant que résine époxy une résine qui se combine avec le HCl éventuellement séparé de l'hydrocarbure chloré selon la caractéristique (a) mais qui ne réagit pas avec les composés amino utilisés en tant que second composant, à savoir une cycloolefine époxydée selon une quantité comprise entre 0,1 et 10 parties en poids de la cycloolefine époxydée pour 100 parties en poids de l'hydrocarbure selon la caractéristique (a),

c) le polybutadiène limité par du brome selon une quantité de 100 parties en poids de polybutadiène pour 30 à 300 parties en poids de l'hydrocarbure chloré selon la caractéristique (a), en tant que second composant

d) une amine ou un aminoamide polyfonctionnel connu en soi et constituant le composé amino, et en tant que composant additionnel

e) un gaz se présentant sous la forme de petites bulles, introduit par insufflation dans le mélange à deux composants fraîchement préparé.

2. Masse de remplissage selon la revendication 1, caractérisée en ce que l'hydrocarbure chloré selon la caractéristique (a) est constitué par une n-paraffine chlorée ou un mélange de paraffine contenu dans la zone $C_{10}$ à $C_{20}$, avec une teneur en chlore située entre 40 et 60 % en poids et une viscosité située entre 100 et 10 000 mPas à 20 °C.

3. Masse de remplissage selon les revendications 1 et 2, caractérisée en ce qu'elle contient en plus des 100 parties en poids du polybutadiène selon la caractéristique (c) de 1 à 30 parties en poids de trioxyde d'antimoine.

4. Masse de remplissage selon les revendications 1 à 3, caractérisée en ce que la cycloolefine époxydée de la caractéristique (b) est du vinylcyclohexendioxyde.